(19)

**Europäisches Patentamt**
**European Patent Office**
**Office européen des brevets**

(11) **EP 4 128 591 B1**

(12) **EUROPEAN PATENT SPECIFICATION**

(45) Date of publication and mention
of the grant of the patent:
**03.12.2025 Bulletin 2025/49**

(21) Application number: **20927410.9**

(22) Date of filing: **24.03.2020**

(51) International Patent Classification (IPC):
**H04L 1/16** *(2023.01)* **H04L 1/00** *(2006.01)*

(52) Cooperative Patent Classification (CPC):
**H04L 1/1685; H04L 1/1854; H04L 1/1887;**
**H04L 2001/0093**

(86) International application number:
**PCT/CN2020/080852**

(87) International publication number:
**WO 2021/189242 (30.09.2021 Gazette 2021/39)**

(54) **TECHNIQUES FOR PROVIDING AN ADAPTIVE CODING RATE IN WIRELESS COMMUNICATIONS**

VERFAHREN ZUR BEREITSTELLUNG EINER ADAPTIVEN CODIERUNGSRATE IN DER DRAHTLOSEN KOMMUNIKATION

TECHNIQUES POUR FOURNIR UN RENDEMENT DE CODAGE ADAPTATIF DANS DES COMMUNICATIONS SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.02.2023 Bulletin 2023/06**

(73) Proprietor: **QUALCOMM INCORPORATED**
**San Diego, California 92121-1714 (US)**

(72) Inventors:
• **LIU, Kangqi**
**San Diego, California 92121-1714 (US)**
• **LI, Jian**
**San Diego, California 92121-1714 (US)**
• **XU, Changlong**
**San Diego, California 92121-1714 (US)**

• **WU, Liangming**
**San Diego, California 92121-1714 (US)**
• **XU, Hao**
**San Diego, California 92121-1714 (US)**

(74) Representative: **Jaeger, Michael David**
**Maucher Jenkins**
**Seventh Floor Offices**
**Artillery House**
**11-19 Artillery Row**
**London SW1P 1RT (GB)**

(56) References cited:
**EP-A1- 2 294 741      EP-A1- 2 304 890**
**EP-B1- 2 294 741      EP-B1- 2 304 890**
**WO-A1-2015/147711    CN-A- 103 973 402**
**CN-A- 104 852 788     CN-A- 108 631 933**
**CN-A- 109 690 991     US-A1- 2015 146 607**

**Description**

**BACKGROUND**

Aspects of the present disclosure relate generally to wireless communication systems, and more particularly, to determining or providing coding rates in wireless communications.

Wireless communication systems are widely deployed to provide various types of communication content such as voice, video, packet data, messaging, broadcast, and so on. These systems may be multiple-access systems capable of supporting communication with multiple users by sharing the available system resources (e.g., time, frequency, and power). Examples of such multiple-access systems include code-division multiple access (CDMA) systems, time-division multiple access (TDMA) systems, frequency-division multiple access (FDMA) systems, and orthogonal frequency-division multiple access (OFDMA) systems, and single-carrier frequency division multiple access (SC-FDMA) systems.

These multiple access technologies have been adopted in various telecommunication standards to provide a common protocol that enables different wireless devices to communicate on a municipal, national, regional, and even global level. For example, a fifth generation (5G) wireless communications technology (which can be referred to as 5G new radio (5G NR)) is envisaged to expand and support diverse usage scenarios and applications with respect to current mobile network generations. In an aspect, 5G communications technology can include: enhanced mobile broadband addressing human-centric use cases for access to multimedia content, services and data; ultra-reliable-low latency communications (URLLC) with certain specifications for latency and reliability; and massive machine type communications, which can allow a very large number of connected devices and transmission of a relatively low volume of non-delay-sensitive information.

In wireless communication technologies such as 5G NR, base stations can use Raptor codes to encode a set of source symbols into a set of encoded symbols that can include a number of redundant nodes to improve detection of the source symbols and/or decoding of related data. In 5G NR, the base stations can use the Raptor codes in transmitting broadcast channel communications, which can include information for communicating with the base stations.

US 2015/146607 A1 describes a system and method for multicast communications in wi-fi networks.

**SUMMARY**

The invention is carried out in accordance with the appended claims.

**BRIEF DESCRIPTION OF THE DRAWINGS**

The disclosed aspects will hereinafter be described in conjunction with the appended drawings, provided to illustrate and not to limit the disclosed aspects, wherein like designations denote like elements, and in which:

FIG. 1 illustrates an example of a wireless communication system, in accordance with various aspects of the present disclosure;
FIG. 2 is a block diagram illustrating an example of a UE, in accordance with various aspects of the present disclosure;
FIG. 3 is a block diagram illustrating an example of a base station, in accordance with various aspects of the present disclosure;
FIG. 4 is a flow chart illustrating an example of a method for encoding communications, in accordance with various aspects of the present disclosure;
FIG. 5 illustrates an example of a block length for encoded symbols, in accordance with various aspects of the present disclosure;
FIG. 6 illustrates an example of multiple block lengths for determining in which blocks to request feedback, in accordance with various aspects of the present disclosure;
FIG. 7 is a flow chart illustrating an example of a method for decoding symbols, in accordance with various aspects of the present disclosure; and
FIG. 8 is a block diagram illustrating an example of a MIMO communication system including a base station and a UE, in accordance with various aspects of the present disclosure.

**DETAILED DESCRIPTION**

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

The described features generally relate to employing feedback from receiving devices to adaptively determine a coding rate for encoding and transmitting signals to the devices. In an example, a device encoding and transmitting communications can determine a first condition for requesting feedback from other devices and/or a second condition for determining to end transmission of certain data (e.g., and/or start transmission of subsequent data), where the second condition may be based on received feedback. In this example, the device can continue encoding and transmitting communications until the second condition occurs, which can indicate successful receipt of the data for at least a certain number of receiving devices, and thus the coding rate can be adapted for a specific transmission in this regard. This may be beneficial, for example, for a base station transmitting broadcast signals to user equipment (UEs) in a wireless communication technology, such as fifth generation (5G) new radio (NR) or other technologies, in an attempt to ensure that a threshold number of UEs receive and can successfully decode a first broadcast signal (e.g., before transmitting a next broadcast signal).

To provide this functionality, devices can use rateless codes for encoding communications, such as fountain codes. Fountain codes can be rateless codes with an unlimited number of columns, where each column can correspond to a symbol for transmission. Using fountain codes, given transmitted packets $p_j = \sum_{k=1}^{K} s_k G_{kj}$, where $s_k$ is a symbol, $K$ is the number of symbols, and G is an original generator matrix, the received and recovered packets can be represented as $r_k = \sum_{n=1}^{N} p_n \, G'^{-1}{}_{nk}$ where $N$ is the number of received symbols and G' is the K*N matrix after combining the received columns. For example, a receiving device may not receive all of the transmitted packets (e.g., all of the columns); the receiving device can combine the received packets (e.g., the received columns), $N$, to generate the K*N matrix, from which the transmitted data can be recovered (e.g., where the number or order of received packets allows for successful recovery). In addition, the receiving device can use the received packets having correct cyclic redundancy check (CRC) in the decoding process. As a condition for recovering the packets, for example, $G'$ can be invertible according to the received packets or the rank of $G'$ can be $K$. In designing the generator matrix, $G'$ can be invertible with a minimum $N$, such that where at least $N$ packets (e.g. columns) are received, the corresponding data can be recovered. As a method to realize function of fountain codes, a Luby transform (LT) code can be used to encode a collection of source symbols.

In an encoding process for each encoding symbol, a device can randomly choose a degree $d_i$ from a degree distribution and can randomly choose $d_i$ distinct source symbols with uniformly distribution and XOR them. In a decoding process (BP), a device can find an encoded symbol $t_j$ that is connected to only one source symbol $s_i$. The device can set $s_i = t_j$, XOR $s_i$ to all encoded symbols that are connected to $s_i$, and then remove all the edges connected to the source symbol $s_i$. The device can repeat this process until all $s_i$ are determined. If there is no encoded symbol that is connected to only one source symbol, then the decoding process fails. In an example, Raptor codes can be used to reduce encoding and decoding complexities of LT codes by reducing the average degree. As part of a precoding process for a set of source symbols, a device can generate some redundant symbols for encoding. For example, the device can generate a number $S$ of low-density parity-check (LDPC) symbols (e.g., each source symbol can appear three times in all LDPC symbols), and a number $H$ of half symbols (e.g., each encoded symbol can include ceil($H$ / 2) source symbols). Then, for encoding the symbols, the device can randomly choose a degree $d_i$ from a degree distribution and can choose $d_i$ distinct source symbols with uniform distribution and XOR them.

In an example, a device can partition each data of length $n$ into $K = n/l$ input symbols (e.g., each symbol contains $l$ bits). The encoder of the device can use these $K$ symbols to generate encoded symbols. For each data, a receiving device can recover with high probability when $N$ encoded symbols are received due to the properties of Raptor codes. Receiver overhead can be represented as $N - K$. In addition, the decoding success probability can be represented as $1 - \frac{1}{2^{N-K+1}}$.

Given the number $K$ of source symbols, the transmitting device can generate any given number of encoded symbols to achieve a desired coding rate. For broadcast signaling, a base station may transmit a broadcast channel, where the broadcast channel may have erasures, using a large number of redundant packages to ensure high recovery possibility for all UEs. Aspects described herein, however, attempt to lessen transmitter overhead by using an adaptive code rate to determine a number of encoded symbols to transmit based on feedback from receiving devices. The transmitter overhead can be defined as a difference between the number of encoded symbols sent at the transmitter and the number of source symbols.

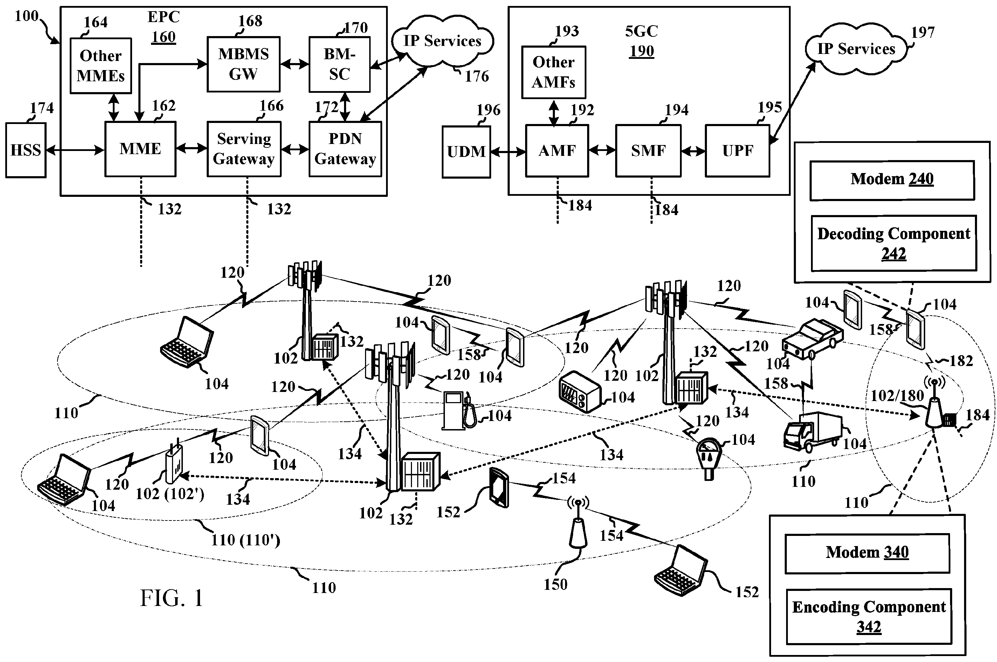

The described features will be presented in more detail below with reference to FIGS. 1-8.

As used in this application, the terms "component," "module," "system" and the like are intended to include a computer-related entity, such as but not limited to hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets, such as data from one component interacting with another component in a local system, distributed system, and/or across a network such as the Internet with other systems by way of the signal.

Techniques described herein may be used for various wireless communication systems such as CDMA, TDMA, FDMA, OFDMA, SC-FDMA, and other systems. The terms "system" and "network" may often be used interchangeably. A CDMA system may implement a radio technology such as CDMA2000, Universal Terrestrial Radio Access (UTRA), etc. CDMA2000 covers IS-2000, IS-95, and IS-856 standards. IS-2000 Releases 0 and A are commonly referred to as CDMA2000 1X, 1X, etc. IS-856 (TIA-856) is commonly referred to as CDMA2000 1xEV-DO, High Rate Packet Data (HRPD), etc. UTRA includes Wideband CDMA (WCDMA) and other variants of CDMA. A TDMA system may implement a radio technology such as Global System for Mobile Communications (GSM). An OFDMA system may implement a radio technology such as Ultra Mobile Broadband (UMB), Evolved UTRA (E-UTRA), IEEE 802.11 (Wi-Fi), IEEE 802.16 (WiMAX), IEEE 802.20, Flash-OFDM™, etc. UTRA and E-UTRA are part of Universal Mobile Telecommunication System (UMTS). 3GPP Long Term Evolution (LTE) and LTE-Advanced (LTE-A) are new releases of UMTS that use E-UTRA. UTRA, E-UTRA, UMTS, LTE, LTE-A, and GSM are described in documents from an organization named "3rd Generation Partnership Project" (3GPP). CDMA2000 and UMB are described in documents from an organization named "3rd Generation Partnership Project 2" (3GPP2). The techniques described herein may be used for the systems and radio technologies mentioned above as well as other systems and radio technologies, including cellular (e.g., LTE) communications over a shared radio frequency spectrum band. The description below, however, describes an LTE/LTE-A system for purposes of example, and LTE terminology is used in much of the description below, although the techniques are applicable beyond LTE/LTE-A applications (e.g., to fifth generation (5G) new radio (NR) networks or other next generation communication systems).

The following description provides examples, and is not limiting of the scope, applicability, or examples set forth in the claims. Changes may be made in the function and arrangement of elements discussed without departing from the scope of the disclosure, in accordance with the appended claims.

Various aspects or features will be presented in terms of systems that can include a number of devices, components, modules, and the like. It is to be understood and appreciated that the various systems can include additional devices, components, modules, etc. and/or may not include all of the devices, components, modules etc. discussed in connection with the figures. A combination of these approaches can also be used.

**FIG. 1** is a diagram illustrating an example of a wireless communications system and an access network 100. The wireless communications system (also referred to as a wireless wide area network (WWAN)) can include base stations 102, UEs 104, an Evolved Packet Core (EPC) 160, and/or a 5G Core (5GC) 190. The base stations 102 may include macro cells (high power cellular base station) and/or small cells (low power cellular base station). The macro cells can include base stations. The small cells can include femtocells, picocells, and microcells. In an example, the base stations 102 may also include gNBs 180, as described further herein. In one example, some nodes of the wireless communication system may have a modem 240 and decoding component 242 for decoding communications received from a base station, in accordance with aspects described herein, and some nodes may have a modem 340 and encoding component 342 for encoding communications for transmitting to one or more UEs (e.g., in broadcast signaling), in accordance with aspects described herein. Though a UE 104 is shown as having the modem 240 and decoding component 242 and a base station 102/gNB 180 is shown as having the modem 340 and encoding component 342, this is one illustrative example, and substantially any node or type of node may include a modem 240 and decoding component 242 and/or a modem 340 and encoding component 342 for providing corresponding functionalities described herein.

The base stations 102 configured for 4G LTE (which can collectively be referred to as Evolved Universal Mobile Telecommunications System (UMTS) Terrestrial Radio Access Network (E-UTRAN)) may interface with the EPC 160 through backhaul links 132 (e.g., using an S1 interface). The base stations 102 configured for 5G NR (which can collectively be referred to as Next Generation RAN (NG-RAN)) may interface with 5GC 190 through backhaul links 184. In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160 or 5GC 190) with each other over backhaul links 134 (e.g., using an X2 interface). The backhaul links 134 may be wired or wireless.

The base stations 102 may wirelessly communicate with one or more UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macro cells may be referred to as a heterogeneous network. A heterogeneous network may also include Home Evolved Node Bs (eNBs) (HeNBs), which may provide service to a restricted group, which can be referred to as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102 / UEs 104 may use spectrum up to Y MHz (e.g., 5, 10, 15, 20, 100, 400, etc. MHz) bandwidth per carrier allocated in a carrier aggregation of up to a total of Yx MHz (e.g., for x component carriers) used for transmission in the DL and/or the UL direction. The carriers may or may not be adjacent to each other. Allocation of carriers may be asymmetric with respect to DL and UL (e.g., more or less carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

In another example, certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, FlashLinQ, WiMedia, Bluetooth, ZigBee, Wi-Fi based on the IEEE 802.11 standard, LTE, or NR.

The wireless communications system may further include a Wi-Fi access point (AP) 150 in communication with Wi-Fi stations (STAs) 152 via communication links 154 in a 5 GHz unlicensed frequency spectrum. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same 5 GHz unlicensed frequency spectrum as used by the Wi-Fi AP 150. The small cell 102', employing NR in an unlicensed frequency spectrum, may boost coverage to and/or increase capacity of the access network.

A base station 102, whether a small cell 102' or a large cell (e.g., macro base station), may include an eNB, gNodeB (gNB), or other type of base station. Some base stations, such as gNB 180 may operate in a traditional sub 6 GHz spectrum, in millimeter wave (mmW) frequencies, and/or near mmW frequencies in communication with the UE 104. When the gNB 180 operates in mmW or near mmW frequencies, the gNB 180 may be referred to as an mmW base station. Extremely high frequency (EHF) is part of the RF in the electromagnetic spectrum. EHF has a range of 30 GHz to 300 GHz and a wavelength between 1 millimeter and 10 millimeters. Radio waves in the band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW / near mmW radio frequency band has extremely high path loss and a short range. The mmW base station 180 may utilize beamforming 182 with the UE 104 to compensate for the extremely high path loss and short range. A base station 102 referred to herein can include a gNB 180.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The 5GC 190 may include a Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 can be a control node that processes the signaling between the UEs 104 and the 5GC 190. Generally, the AMF 192 can provide QoS flow and session management. User Internet protocol (IP) packets (e.g., from one or more UEs 104) can be transferred through the UPF 195. The UPF 195 can provide UE IP address allocation for one or more UEs, as well as other functions. The UPF 195 is connected to the IP Services 197. The IP Services 197 may include the Internet, an intranet, an IP Multimedia Subsystem (IMS), a PS Streaming Service, and/or other IP services.

The base station may also be referred to as a gNB, Node B, evolved Node B (eNB), an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or 5GC 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). IoT UEs may include machine type communication (MTC)/enhanced MTC (eMTC, also referred to as category (CAT)-M, Cat M1) UEs, NB-IoT (also referred to as CAT NB1) UEs, as well as other types of UEs. In the present disclosure, eMTC and NB-IoT may refer to future technologies that may evolve from or may be based on these technologies. For example, eMTC may include FeMTC (further eMTC), eFeMTC (enhanced further eMTC), mMTC (massive MTC), etc., and NB-IoT may include eNB-IoT (enhanced NB-IoT), FeNB-IoT (further enhanced NB-IoT), etc. The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

In an example, encoding component 342 can encode and transmit a set of symbols representing data using an adaptive coding rate based on feedback from one or more decoding components 242. For example, encoding component 342 can obtain a set of source symbols and can encode and transmit a corresponding first number of encoded symbols. Based on detecting a first condition, for example, encoding component 342 can begin requesting feedback from one or more devices receiving and decoding the encoded symbols. In this example, decoding component 242 can provide feedback related to success of decoding the encoded symbols as received. Encoding component 342 can continue encoding and transmitting encoded symbols representative of the data, and receiving corresponding feedback, until a second condition related to the feedback is detected, at which point encoding component 342 can stop transmitting the encoded symbols and/or can move on to encoding and/or transmitting next data. Encoding component 342 can achieve an adaptive coding rate in this regard.

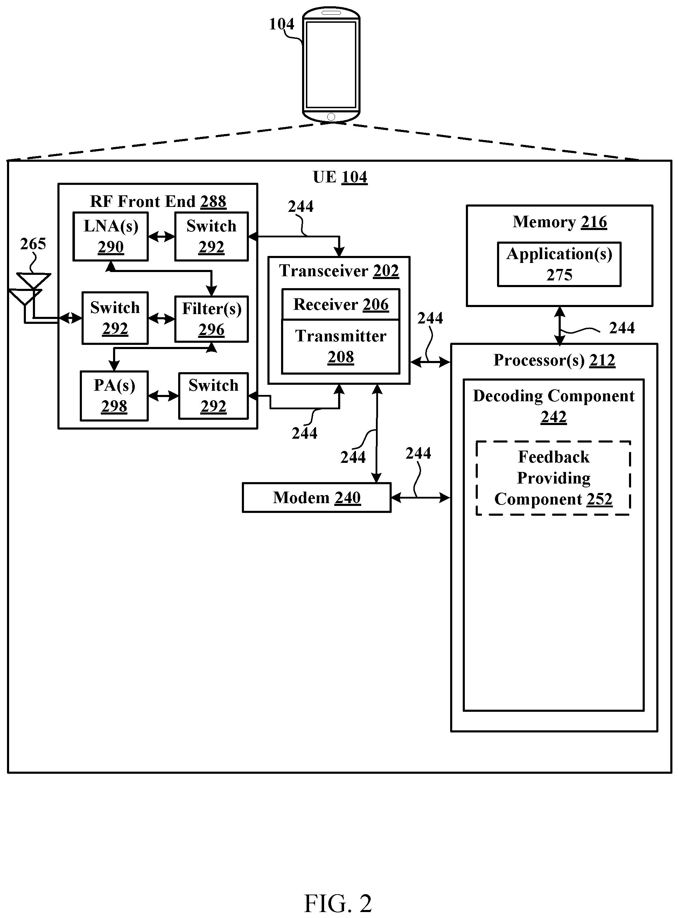

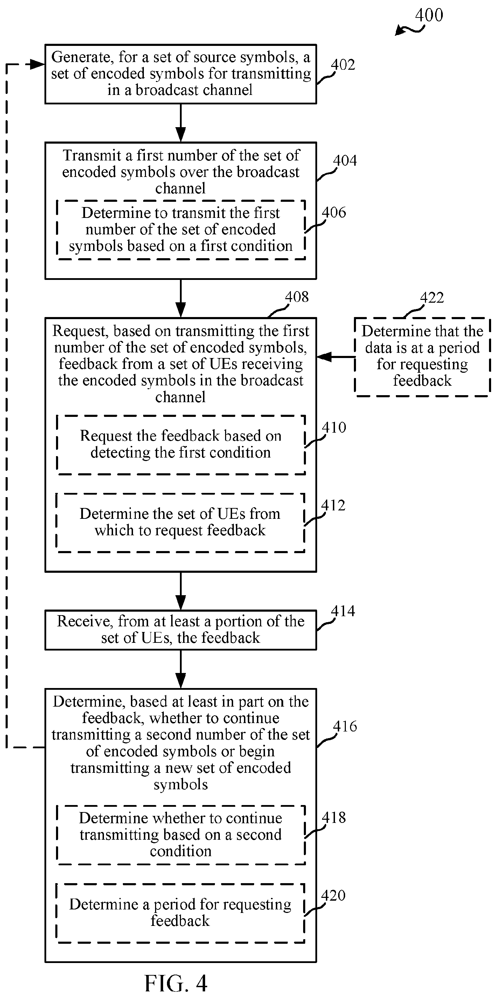

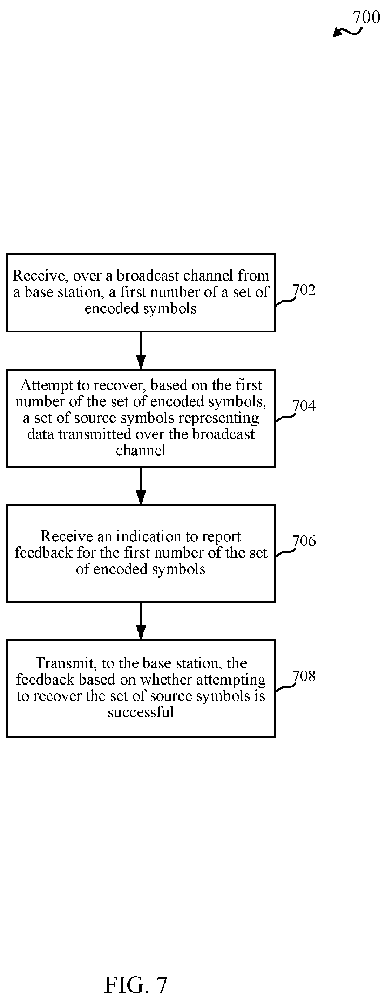

Turning now to **FIGS. 2-8,** aspects are depicted with reference to one or more components and one or more methods that may perform the actions or operations described herein, where aspects in dashed line may be optional. Although the operations described below in FIGS. 4 and 7 are presented in a particular order and/or as being performed by an example component, it should be understood that the ordering of the actions and the components performing the actions may be varied, depending on the implementation. Moreover, it should be understood that the following actions, functions, and/or described components may be performed by a specially programmed processor, a processor executing specially programmed software or computer-readable media, or by any other combination of a hardware component and/or a software component capable of performing the described actions or functions.

Referring to **FIG. 2,** one example of an implementation of UE 104 may include a variety of components, some of which have already been described above and are described further herein, including components such as one or more processors 212 and memory 216 and transceiver 202 in communication via one or more buses 244, which may operate in conjunction with modem 240 and/or decoding component 242 for decoding communications received from a base station, as described further herein.

In an aspect, the one or more processors 212 can include a modem 240 and/or can be part of the modem 240 that uses one or more modem processors. Thus, the various functions related to decoding component 242 may be included in modem 240 and/or processors 212 and, in an aspect, can be executed by a single processor, while in other aspects, different ones of the functions may be executed by a combination of two or more different processors. For example, in an aspect, the one or more processors 212 may include any one or any combination of a modem processor, or a baseband processor, or a digital signal processor, or a transmit processor, or a receiver processor, or a transceiver processor associated with transceiver 202. In other aspects, some of the features of the one or more processors 212 and/or modem 240 associated with decoding component 242 may be performed by transceiver 202.

Also, memory 216 may be configured to store data used herein and/or local versions of applications 275 or decoding component 242 and/or one or more of its subcomponents being executed by at least one processor 212. Memory 216 can include any type of computer-readable medium usable by a computer or at least one processor 212, such as random access memory (RAM), read only memory (ROM), tapes, magnetic discs, optical discs, volatile memory, non-volatile memory, and any combination thereof. In an aspect, for example, memory 216 may be a non-transitory computer-readable storage medium that stores one or more computer-executable codes defining decoding component 242 and/or one or more of its subcomponents, and/or data associated therewith, when UE 104 is operating at least one processor 212 to execute decoding component 242 and/or one or more of its subcomponents.

Transceiver 202 may include at least one receiver 206 and at least one transmitter 208. Receiver 206 may include hardware, firmware, and/or software code executable by a processor for receiving data, the code comprising instructions and being stored in a memory (e.g., computer-readable medium). Receiver 206 may be, for example, a radio frequency (RF) receiver. In an aspect, receiver 206 may receive signals transmitted by at least one base station 102. Additionally, receiver 206 may process such received signals, and also may obtain measurements of the signals, such as, but not limited to, Ec/Io, signal-to-noise ratio (SNR), reference signal received power (RSRP), received signal strength indicator (RSSI), etc. Transmitter 208 may include hardware, firmware, and/or software code executable by a processor for transmitting data, the code comprising instructions and being stored in a memory (e.g., computer-readable medium). A suitable example of transmitter 208 may including, but is not limited to, an RF transmitter.

Moreover, in an aspect, UE 104 may include RF front end 288, which may operate in communication with one or more antennas 265 and transceiver 202 for receiving and transmitting radio transmissions, for example, wireless communications transmitted by at least one base station 102 or wireless transmissions transmitted by UE 104. RF front end 288 may be connected to one or more antennas 265 and can include one or more low-noise amplifiers (LNAs) 290, one or more switches 292, one or more power amplifiers (PAs) 298, and one or more filters 296 for transmitting and receiving RF signals.

In an aspect, LNA 290 can amplify a received signal at a desired output level. In an aspect, each LNA 290 may have a specified minimum and maximum gain values. In an aspect, RF front end 288 may use one or more switches 292 to select a particular LNA 290 and its specified gain value based on a desired gain value for a particular application.

Further, for example, one or more PA(s) 298 may be used by RF front end 288 to amplify a signal for an RF output at a desired output power level. In an aspect, each PA 298 may have specified minimum and maximum gain values. In an aspect, RF front end 288 may use one or more switches 292 to select a particular PA 298 and its specified gain value based on a desired gain value for a particular application.

Also, for example, one or more filters 296 can be used by RF front end 288 to filter a received signal to obtain an input RF signal. Similarly, in an aspect, for example, a respective filter 296 can be used to filter an output from a respective PA 298 to produce an output signal for transmission. In an aspect, each filter 296 can be connected to a specific LNA 290 and/or PA 298. In an aspect, RF front end 288 can use one or more switches 292 to select a transmit or receive path using a specified filter 296, LNA 290, and/or PA 298, based on a configuration as specified by transceiver 202 and/or processor 212.

As such, transceiver 202 may be configured to transmit and receive wireless signals through one or more antennas 265 via RF front end 288. In an aspect, transceiver may be tuned to operate at specified frequencies such that UE 104 can communicate with, for example, one or more base stations 102 or one or more cells associated with one or more base stations 102. In an aspect, for example, modem 240 can configure transceiver 202 to operate at a specified frequency and power level based on the UE configuration of the UE 104 and the communication protocol used by modem 240.

In an aspect, modem 240 can be a multiband-multimode modem, which can process digital data and communicate with transceiver 202 such that the digital data is sent and received using transceiver 202. In an aspect, modem 240 can be multiband and be configured to support multiple frequency bands for a specific communications protocol. In an aspect, modem 240 can be multimode and be configured to support multiple operating networks and communications protocols. In an aspect, modem 240 can control one or more components of UE 104 (e.g., RF front end 288, transceiver 202) to enable transmission and/or reception of signals from the network based on a specified modem configuration. In an aspect, the modem configuration can be based on the mode of the modem and the frequency band in use. In another aspect, the modem configuration can be based on UE configuration information associated with UE 104 as provided by the network during cell selection and/or cell reselection.

In an aspect, decoding component 242 can optionally include a feedback providing component 252 for generating and transmitting feedback related to success (or failure) of decoding communications received from another device (e.g., from a base station), as described further herein.

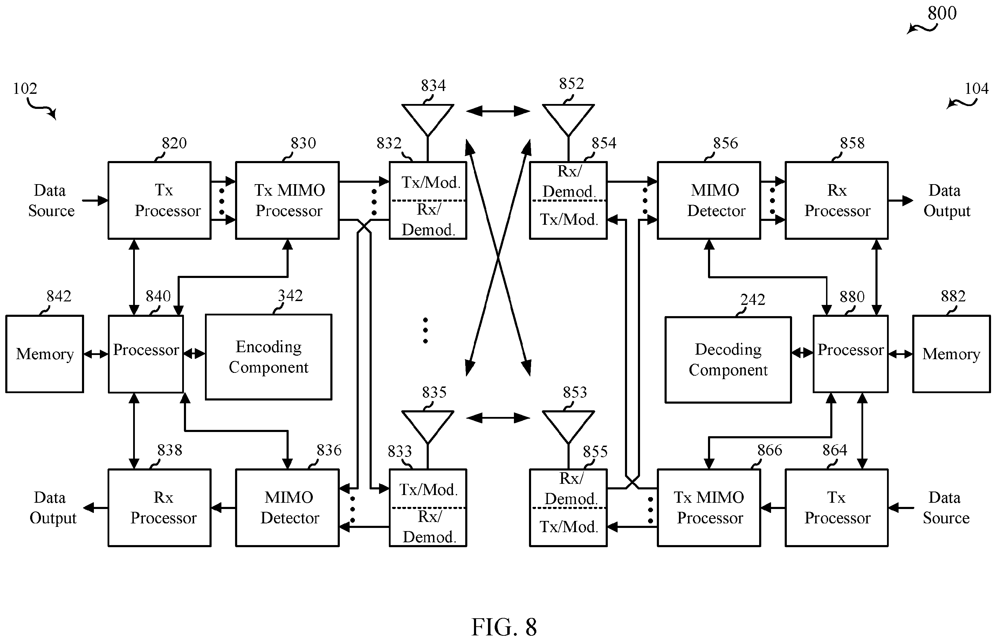

In an aspect, the processor(s) 212 may correspond to one or more of the processors described in connection with the UE in FIG. 8. Similarly, the memory 216 may correspond to the memory described in connection with the UE in FIG. 8.

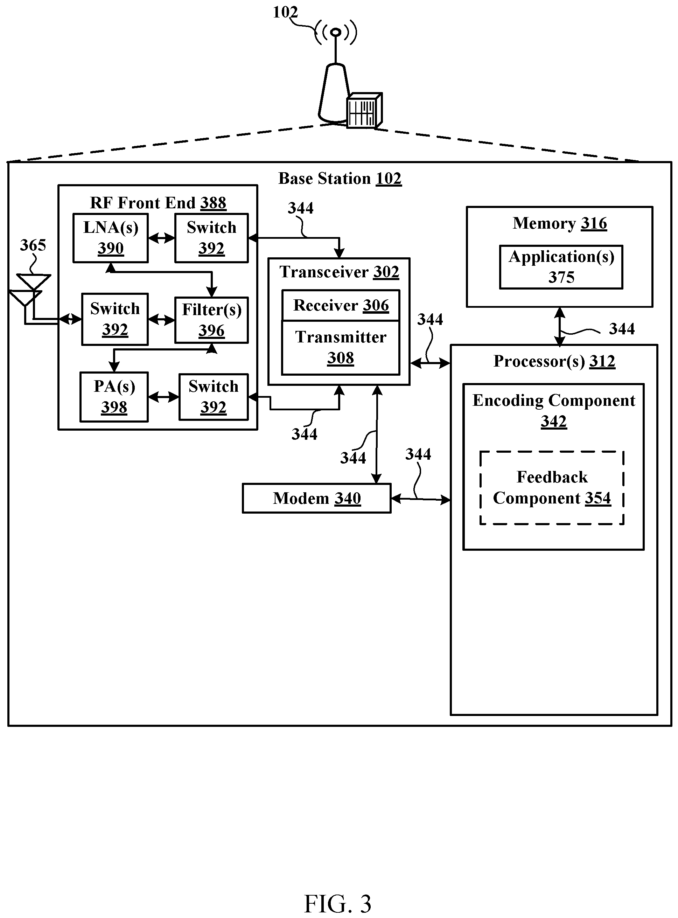

Referring to **FIG. 3,** one example of an implementation of base station 102 (e.g., a base station 102 and/or gNB 180, as described above) may include a variety of components, some of which have already been described above, but including components such as one or more processors 312 and memory 316 and transceiver 302 in communication via one or more buses 344, which may operate in conjunction with modem 340 and encoding component 342 for encoding communications for transmitting to one or more UEs (e.g., in broadcast signaling), as described further herein.

The transceiver 302, receiver 306, transmitter 308, one or more processors 312, memory 316, applications 375, buses 344, RF front end 388, LNAs 390, switches 392, filters 396, PAs 398, and one or more antennas 365 may be the same as or similar to the corresponding components of UE 104, as described above, but configured or otherwise programmed for base station operations as opposed to UE operations.

In an aspect, encoding component 342 can optionally include a feedback component 354 for receiving and using feedback from receiving devices to determine when to stop transmitting symbols representative of data to achieve an adaptive coding rate, as described further herein.

In an aspect, the processor(s) 312 may correspond to one or more of the processors described in connection with the base station in FIG. 8. Similarly, the memory 316 may correspond to the memory described in connection with the base station in FIG. 8.

FIG. 4 illustrates a flow chart of an example of a method 400 for encoding communications based on feedback from receiving devices. In an example, a base station 102 can perform the functions described in method 400 using one or more of the components described in FIGS. 1 and 3.

In method 400, at Block 402, a set of encoded symbols can be generated, for a set of source symbols, for transmitting in a broadcast channel. In an aspect, encoding component 342, e.g., in conjunction with processor(s) 312, memory 316, transceiver 302, etc., can generate, for the set of source symbols, the set of encoded symbols for transmitting in a broadcast channel. Though described in terms of broadcast channel communications, encoding component 342 can encode and transmit substantially any type of communications using the functionality described herein. In an example, encoding component 342 can obtain the set of source symbols that are representative of data to be transmitted in the broadcast channel. The source symbols may each include an upper layer packet, such as a radio link control (RLC) layer packet, a packet data convergence protocol (PDCP) layer packet, etc. For example, the original data unit can have $n$ bits. Each data unit can be partitioned into $K = n/l$ input source symbols, e.g., each symbol contains $l$ bits. In this example, encoding component 342 can use these $K$ source symbols to generate encoded symbols. In addition, for example, encoding component 342 can generate the encoded symbols using an encoding scheme for generating fountain codes, such as LT codes, Raptor codes, etc. Encoding component 342, for example, can generate a first number of encoded symbols for transmitting over the broadcast channel. In one example, the first number of encoded symbols may include at least the number of source symbols.

In method 400, at Block 404, a first number of the set of encoded symbols can be transmitted over the broadcast channel. In an aspect, encoding component 342, e.g., in conjunction with processor(s) 312, memory 316, transceiver 302, etc., can transmit the first number of the set of encoded symbols over the broadcast channel. For example, encoding component 342 can modulate the symbols (e.g., via modem 240) for transmitting over the broadcast channel, and can use transceiver 302 to transmit the modulated encoded symbols over time and/or frequency resources that define the broadcast channel.

In an example, in determining the first number of the set of encoded symbols at Block 404, optionally at Block 406, it can be determined to transmit the first number of the set of encoded symbols based on a first condition. In an aspect, encoding component 342, e.g., in conjunction with processor(s) 312, memory 316, transceiver 302, etc., can determine to transmit the first number of the set of encoded symbols based on the first condition. For example, the first condition can include a parameter value that represents a number, $N$, of packets transmitted as encoded symbols by the transmitter (e.g., by the base station 102 transmitting the packets over the broadcast channel). In an example, $N$ can be a fixed or configured number (e.g., as described above in reference to Raptor code overhead). In another example, $N$ can be a historical value $N'$ packets sent from the transmitter, where $N'$ can be obtained by a function of historical transmitter overhead. In any case, encoding component 342 can detect the occurrence of the first condition as transmission of $N$ packets, and can begin requesting feedback from receiving devices based on detecting this first condition.

In method 400, at Block 408, feedback can be requested, based on transmitting the first number of the set of encoded symbols, from a set of UEs receiving the encoded symbols in the broadcast channel. In an aspect, feedback component 352, e.g., in conjunction with processor(s) 312, memory 316, transceiver 302, encoding component 342, etc., can request, based on transmitting the first number of the set of encoded symbols, feedback from the set of UEs receiving the encoded symbols in the broadcast channel. For example, feedback component 352 can request feedback from all UEs, from a set of UEs, etc. In addition, in an example, feedback component 352 can request feedback for the data represented by the encoded symbols (e.g., whether the UEs are able to recover the data given the encoded symbols received by each UE. In an example, the request for feedback can include an indication of resources over which the UE 104 is to transmit feedback indicating whether the data is recovered.

In requesting the feedback at Block 408, optionally at Block 410, the feedback can be requested based on detecting the first condition. In an aspect, feedback component 352, e.g., in conjunction with processor(s) 312, memory 316, transceiver 302, encoding component 342, etc., can request the feedback based on detecting the first condition. As described, feedback component 352 can detect the first condition, which may relate to detecting transmission of $N$ encoded symbols. Based on this condition, feedback component 352 can determine to begin requesting feedback for transmitted encoded symbols.

In requesting the feedback at Block 408, optionally at Block 412, the set of UEs from which to request feedback can be determined. In an aspect, feedback component 352, e.g., in conjunction with processor(s) 312, memory 316, transceiver 302, encoding component 342, etc., can determine the set of UEs from which to request feedback. For example, feedback component 352 can determine the set of UEs to be all UEs receiving the encoded symbols (e.g., feedback component 352 can broadcast a request for feedback over the broadcast channel). In another example, feedback component 352 can determine the set of UEs to include a subset of the UEs receiving the encoded symbols, etc.,

which can be a random-sampling of a number, *V*, of UEs. In this regard, for example, feedback component 352 can determine the set of *V* UEs by randomly selecting from all UEs receiving the broadcast signals, randomly selecting from UEs receiving the broadcast signals that are determined to be at a cell-edge (e.g., based on signal measurement reports from the UEs of measurements of signals transmitted by the base station being below a threshold strength or signal-to-noise radio, etc.).

In method 400, at Block 414, the feedback can be received from at least a portion of the set of UEs. In an aspect, feedback component 352, e.g., in conjunction with processor(s) 312, memory 316, transceiver 302, encoding component 342, etc., can receive, from at least the portion of the set of UEs, the feedback. For example, feedback component 352 can receive the feedback indicating whether decoding of the encoded symbols received by the UE 104 allow for successful recovery of the original data. For example, feedback component 352 can receive the feedback from at least the portion of the set of UEs from which feedback is requested, where the feedback can be received over time and/or frequency resources indicated for communicating the feedback, as described.

In method 400, at Block 416, it can be determined whether to continue transmitting a second number of the set of encoded symbols or begin transmitting a new set of encoded symbols based at least in part on the feedback. In an aspect, encoding component 342, e.g., in conjunction with processor(s) 312, memory 316, transceiver 302, etc., can determine, based at least in part on the feedback, whether to continue transmitting a second number of the set of encoded symbols or begin transmitting a new set of encoded symbols. For example, encoding component 342 can determine to continue transmitting the second number of encoded symbols to continue transmitting the current data where feedback indicates that a threshold number of devices have not successfully received or decoded the current data, or can determine to transmit new data where feedback indicates that a threshold number of devices have successfully received and decoded the current data.

In an example, in determining whether to continue transmitting the second number of the set of encoded symbols or begin transmitting the new set of encoded symbols at Block 416, optionally at Block 416, it can be determined whether to continue transmitting based on a second condition. In an aspect, encoding component 342, e.g., in conjunction with processor(s) 312, memory 316, transceiver 302, etc., can determine whether to continue transmitting based on the second condition. For example, the second condition can relate to the feedback received from at least the portion of the set of UEs (e.g., and whether the feedback indicates that a desired number of UEs have received and decoded the data). For example, encoding component 342 can determine to continue transmitting the second number of the set of encoded symbols where the number of UEs that report success of decoding the data does not achieve a threshold, or where the number of UEs that report failure of decoding or do not report feedback achieves a threshold, etc. In another example, encoding component 342 can determine to transmit the new set of encoded symbols for new data where the number of UEs that report success of decoding the data achieves a threshold, or where the number of UEs that report failure of decoding or do not report feedback do not achieve a threshold, etc.

In a specific example, encoding component 342 can detect occurrence of the second condition for determining to stop transmitting the set of encoded symbols (e.g., stop with transmitting the first number of symbols and not transmit the second number of symbols) based on determining that a threshold *a*% of UEs feedback success (e.g., acknowledgement (ACK) from the set of UEs), which may be a random-sampling of *V* UEs, as described above. In another example, encoding component 342 can detect occurrence of the second condition based on determining that a threshold b% of UEs feedback success (e.g., ACK) from the set of UEs (e.g., the random-sampling of *V* UEs from which feedback is requested) such to indicate an assumption that overall *a*% of UEs have recovered the data with high probability *p*. In this example, b% = (*a* + Δ*a*)% can be obtained based on determining a *p* confidence interval between 0% and 100% as (*a* - Δ*a*)% to (*a* + Δ*a*)% (e.g., with *a*% in the center). In an example,

$$b\% = \Delta a\% + a\% = f(p) \cdot \sqrt{\frac{b\%(1 - b\%)}{V}} + a\%$$

where *f*(*p*) = 1.96 when *p* = 0.95 and *f*(*p*) = 1.65 when *p* = 0.9, etc. In an example, larger *V* can yield smaller Δ*a*%, which can yield smaller b%.

If the second condition is not met, encoding component 342 can continue encoding symbols based on the set of source symbols to continue transmitting the original data, and may do so until the second condition is met. Thus, in this example, encoding component 342 can continue encoding and transmitting the encoded symbols, and feedback component 352 can continue to receive the requested feedback, until encoding component 342 determines that the second condition is met, which can allow for providing an adaptive coding rate for transmitting the communications.

In determining to continue transmitting the second number of the set of encoded symbols at Block 416, optionally at Block 420, a period for requesting feedback can be determined. In an aspect, feedback component 352, e.g., in conjunction with processor(s) 312, memory 316, transceiver 302, encoding component 342, etc., can determine a period for requesting feedback, which can be based on one or more considerations such as a level of transmitter overhead. For example, in requesting feedback, feedback component 352 can determine and/or specify symbols for which feedback is requested, which may be according to a period of contiguous symbols (e.g., feedback can be requested for every other symbol, e.g., period = 2, or other period of symbols). The period, in this example, can correspond to the number of encoded symbols to encode and/or transmit before again requesting feedback from the UEs. For example, feedback component 352 can select the period based on one or more parameters, such as transmitter overhead, percentage of successful feedback received from UEs (e.g., historically or for a current data transmission), etc. In this example, encoding component 342 can proceed to Block 402 to continue generating encoded symbols for the set of source symbols, and can generate a number of encoded symbols according to the determined period. In addition, in this example, in determining the set of UEs from which to request feedback at Block 408 (or 412), feedback component 352 may determine to request feedback from a different set of UEs than before (e.g., to add some UEs, remove some UEs, determine a different set of UEs that are currently at cell-edge, etc.). In another example, where the second condition is met, encoding component 342 can stop transmitting the encoded symbols for the original data and/or can begin generating encoded symbols (e.g., at Block 402) for a new set of source symbols corresponding to subsequent data for transmitting.

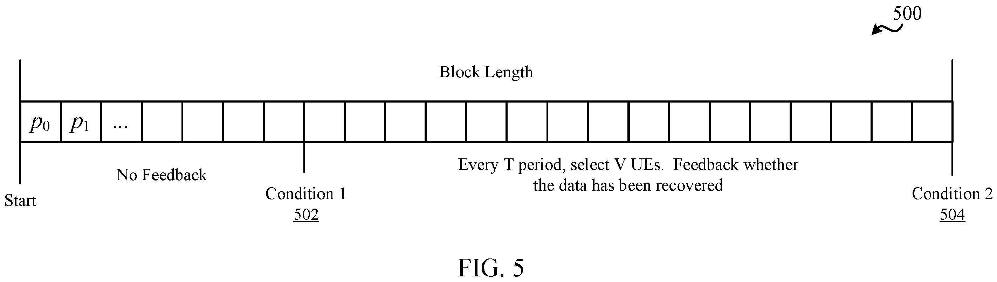

A specific example is shown in **FIG. 5,** which illustrates a block length 500 for a data transmission that includes multiple encoded symbols $p_0$, $p_1$, etc. where initially, no feedback is transmitted. Condition 1 is detected at 502, after which point feedback can be requested from a random-sampling of $V$ UEs. In an example, feedback can be continually requested from the same or different sampling of $V$ UEs after transmitting $T$ symbols, based on a period $T$, until Condition 2 is detected. Condition 2 is detected at 504, after which point transmission of the symbols can be stopped and transmission of a next block can begin. In an example, assuming that there are $U$ UEs in the network, for each data transmission, when Condition 1 holds, feedback from random-sampling $V$ UEs can start to be transmitted. The transmitter can continue requesting feedback from the same or different random-sampling $V$ UEs every $T$ symbols until Condition 2 is detected. When Condition 2 holds, the transmitter can start to send the next data. The number of the transmit encoded symbols can be adaptive to the performance in receiver indicated by the feedback in Condition 2.

In method 400, optionally at Block 422, it can be determined that the data is at a period for requesting feedback. In an aspect, encoding component 342, e.g., in conjunction with processor(s) 312, memory 316, transceiver 302, etc., can determine that the data is at a period for requesting feedback, referred to as a feedback period. For example, encoding component 342 can determine to request feedback only for certain data transmissions, which may be determined according to the feedback period. In addition, the period can be adjusted based on whether the overhead at the transmitter is convergent (or other considerations). In an example, encoding component 342 can initially determine to request feedback for every data transmission (e.g., every block of symbols), and then can determine to request feedback for a subset of data transmissions (e.g., according to a period) where the transmitter overhead is convergent. Where the transmitter overhead becomes divergent, encoding component 342 can adjust the period (e.g., to a smaller value) until the transmitter overhead is again convergent, at which point encoding component 342 can adjust the period (e.g., to a larger value) and so on.

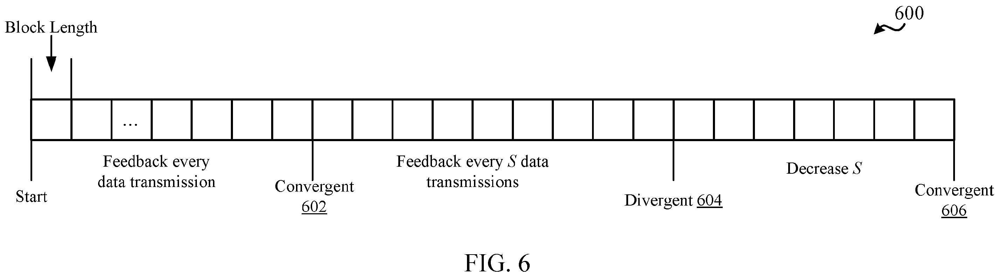

An example is illustrated in **FIG. 6,** which illustrates multiple block lengths 600 corresponding to multiple data transmissions (e.g., each block length including a number of symbols, as shown in FIG. 5). As shown, for example, the blocks can be transmitted with feedback requested for every data transmission (e.g., where the feedback is requested for each block once condition 1 is met, as shown in FIG. 5 and described above). Where overhead is convergent at 602, feedback can instead be requested for every $S$ data transmission (e.g., each Sth block, where $S$ is the period) to lessen the feedback signaling. In blocks where feedback is not requested, for example, the transmitter can transmit the data transmission using a same or similar number of encoded symbols as a preceding data transmission. In any case, where overhead becomes divergent at 604, S can be decreased (e.g., to a lesser value or to one such to request feedback for each data transmission) to increase the feedback rate. Feedback can be requested for decreased S until the overhead is again convergent at 606, at which point $S$ can be increased, etc. In this regard, for example, if the transmitter overhead is convergent over several data transmission, then there might be no feedback from certain data transmission, which can conserve power for reporting feedback, spectrum resources, processing and complexity associated with feedback determination, etc.

**FIG. 7** illustrates a flow chart of an example of a method 700 for decoding communications and providing feedback for the decoding. In an example, a UE 104 can perform the functions described in method 700 using one or more of the components described in FIGS. 1 and 2.

In method 700, at Block 702, a first number of a set of encoded symbols can be received over a broadcast channel from a base station. In an aspect, decoding component 242, e.g., in conjunction with processor(s) 212, memory 216, transceiver 202, etc., can receive, over the broadcast channel from the base station (e.g., base station 102), the first number of the set of encoded symbols. For example, the decoding component 242 can receive the encoded symbols in time and/or frequency resources that define the broadcast channel. In an example, the time and/or frequency resources can be configured by the base station 102, specified in a configuration for a wireless communication technology (e.g., 5G NR), and thus coded in memory 216 of the UE 104, etc.

In method 700, at Block 704, recovering of a set of source symbols representing data transmitted over the broadcast channel can be attempted based on the first number of the set of encoded symbols. In an aspect, decoding component 242, e.g., in conjunction with processor(s) 212, memory 216, transceiver 202, etc., can attempt to recover, based on the first number of the set of encoded symbols, the set of source symbols representing data transmitted over the broadcast channel. As described, for example, decoding component 242 can perform one or more of the decoding processes described above (e.g., find an encoded symbol $t_j$ that is connected to only one source symbol $s_i$, set $s_i = t_j$, XOR $s_i$ to all encoded symbols that are connected to $s_i$, remove all the edges connected to the source symbol $s_i$, repeat until all $s_i$ are determined). Decoding component 242 can do this for received encoded symbols with correct CRC.

In method 700, at Block 706, an indication to report feedback for the first number of the set of encoded symbols can be received. In an aspect, feedback providing component 252, e.g., in conjunction with processor(s) 212, memory 216, transceiver 202, decoding component 242, etc., can receive (e.g., base station 102), the indication to report feedback for the first number of the set of encoded symbols. For example, the indication may be received after receiving the first number of the set of encoded symbols and/or can be received beforehand with an indication to report feedback after receiving the first number of the set of encoded symbols, etc. In addition, in an example, feedback providing component 252 can receive the indication for reporting feedback for a period of symbols (e.g., for reporting feedback for at least a period number of symbols from a last symbol of the first number of the set of encoded symbols and continuing based on the period) until successful decoding is achieved, and/or may receive the indication relating to each of multiple symbols until successful decoding is achieved, as described above.

In method 700, at Block 708, the feedback can be transmitted to the base station based on whether attempting to recover the set of source symbols is successful. In an aspect, feedback providing component 252, e.g., in conjunction with processor(s) 212, memory 216, transceiver 202, decoding component 242, etc., can transmit, to the base station, the feedback based on whether attempting to recover the set of source symbols is successful. For example, feedback providing component 252 can transmit successful feedback (e.g., ACK) where decoding is successful or failure feedback (e.g., negative ACK (NACK) or no feedback) where decoding is not successful. As described, based on the feedback, the base station may continue transmitting encoded symbols for the data transmission, in which case decoding component 242 can continue to attempt decoding the data based on additional encoded symbols, or can stop transmitting the encoded symbols and/or transmit a new set of encoded symbols for new data to be decoded.

FIG. 8 is a block diagram of a MIMO communication system 800 including a base station 102 and a UE 104. The MIMO communication system 800 may illustrate aspects of the wireless communication access network 100 described with reference to FIG. 1. The base station 102 may be an example of aspects of the base station 102 described with reference to FIG. 1. The base station 102 may be equipped with antennas 834 and 835, and the UE 104 may be equipped with antennas 852 and 853. In the MIMO communication system 800, the base station 102 may be able to send data over multiple communication links at the same time. Each communication link may be called a "layer" and the "rank" of the communication link may indicate the number of layers used for communication. For example, in a 2x2 MIMO communication system where base station 102 transmits two "layers," the rank of the communication link between the base station 102 and the UE 104 is two.

At the base station 102, a transmit (Tx) processor 820 may receive data from a data source. The transmit processor 820 may process the data. The transmit processor 820 may also generate control symbols or reference symbols. A transmit MIMO processor 830 may perform spatial processing (e.g., precoding) on data symbols, control symbols, or reference symbols, if applicable, and may provide output symbol streams to the transmit modulator/demodulators 832 and 833. Each modulator/demodulator 832 through 833 may process a respective output symbol stream (e.g., for OFDM, etc.) to obtain an output sample stream. Each modulator/demodulator 832 through 833 may further process (e.g., convert to analog, amplify, filter, and upconvert) the output sample stream to obtain a DL signal. In one example, DL signals from modulator/demodulators 832 and 833 may be transmitted via the antennas 834 and 835, respectively.

The UE 104 may be an example of aspects of the UEs 104 described with reference to FIGS. 1-2. At the UE 104, the UE antennas 852 and 853 may receive the DL signals from the base station 102 and may provide the received signals to the modulator/demodulators 854 and 855, respectively. Each modulator/demodulator 854 through 855 may condition (e.g., filter, amplify, downconvert, and digitize) a respective received signal to obtain input samples. Each modulator/demodulator 854 through 855 may further process the input samples (e.g., for OFDM, etc.) to obtain received symbols. A MIMO detector 856 may obtain received symbols from the modulator/demodulators 854 and 855, perform MIMO detection on the received symbols, if applicable, and provide detected symbols. A receive (Rx) processor 858 may process (e.g., demodulate, deinterleave, and decode) the detected symbols, providing decoded data for the UE 104 to a data output, and provide decoded control information to a processor 880, or memory 882.

The processor 880 may in some cases execute stored instructions to instantiate a decoding component 242 (see e.g., FIGS. 1 and 2).

On the uplink (UL), at the UE 104, a transmit processor 864 may receive and process data from a data source. The transmit processor 864 may also generate reference symbols for a reference signal. The symbols from the transmit processor 864 may be precoded by a transmit MIMO processor 866 if applicable, further processed by the modulator/demodulators 854 and 855 (e.g., for SC-FDMA, etc.), and be transmitted to the base station 102 in accordance with the communication parameters received from the base station 102. At the base station 102, the UL signals from the UE 104 may be received by the antennas 834 and 835, processed by the modulator/demodulators 832 and 833, detected by a MIMO detector 836 if applicable, and further processed by a receive processor 838. The receive processor 838 may provide decoded data to a data output and to the processor 840 or memory 842.

The processor 840 may in some cases execute stored instructions to instantiate a encoding component 342 (see e.g., FIGS. 1 and 3).

The components of the UE 104 may, individually or collectively, be implemented with one or more application specific integrated circuits (ASICs) adapted to perform some or all of the applicable functions in hardware. Each of the noted modules may be a means for performing one or more functions related to operation of the MIMO communication system 800. Similarly, the components of the base station 102 may, individually or collectively, be implemented with one or more ASICs adapted to perform some or all of the applicable functions in hardware. Each of the noted components may be a means for performing one or more functions related to operation of the MIMO communication system 800.

The above detailed description set forth above in connection with the appended drawings describes examples and does not represent the only examples that may be implemented or that are within the scope of the claims. The term "example," when used in this description, means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and apparatuses are shown in block diagram form in order to avoid obscuring the concepts of the described examples.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, computer-executable code or instructions stored on a computer-readable medium, or any combination thereof.

The various illustrative blocks and components described in connection with the disclosure herein may be implemented or performed with a specially programmed device, such as but not limited to a processor, a digital signal processor (DSP), an ASIC, a field programmable gate array (FPGA) or other programmable logic device, a discrete gate or transistor logic, a discrete hardware component, or any combination thereof designed to perform the functions described herein. A specially programmed processor may be a microprocessor, but in the alternative, the processor may be any conventional processor, controller, microcontroller, or state machine. A specially programmed processor may also be implemented as a combination of computing devices, e.g., a combination of a DSP and a microprocessor, multiple microprocessors, one or more microprocessors in conjunction with a DSP core, or any other such configuration.

The functions described herein may be implemented in hardware, software executed by a processor, firmware, or any combination thereof. If implemented in software executed by a processor, the functions may be stored on or transmitted over as one or more instructions or code on a non-transitory computer-readable medium. Other examples and implementations are within the scope of the disclosure and appended claims. For example, due to the nature of software, functions described above can be implemented using software executed by a specially programmed processor, hardware, firmware, hardwiring, or combinations of any of these. Features implementing functions may also be physically located at various positions, including being distributed such that portions of functions are implemented at different physical locations. Also, as used herein, including in the claims, "or" as used in a list of items prefaced by "at least one of" indicates a disjunctive list such that, for example, a list of "at least one of A, B, or C" means A or B or C or AB or AC or BC or ABC (i.e., A and B and C).

Computer-readable media includes both computer storage media and communication media including any medium that facilitates transfer of a computer program from one place to another. A storage medium may be any available medium that can be accessed by a general purpose or special purpose computer. By way of example, and not limitation, computer-readable media can comprise RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk and Blu-ray disc where disks usually reproduce data magnetically, while discs reproduce data optically with lasers. Combinations of the above are also included within the scope of computer-readable media.

The previous description of the disclosure is provided to enable a person skilled in the art to make or use the disclosure. Various modifications to the disclosure will be readily apparent to those skilled in the art, and the common principles defined herein may be applied to other variations without departing from the scope of the disclosure. Furthermore, although elements of the described aspects and/or embodiments may be described or claimed in the singular, the plural is contemplated unless limitation to the singular is explicitly stated. Thus, the disclosure is not to be limited to the examples and designs described herein but is to be accorded the widest scope consistent with the principles and novel features disclosed herein, in accordance with the appended claims.

## Claims

1.  A method for wireless communication, comprising:

    generating (402), for a set of source symbols representing data to be transmitted in a broadcast channel, a set of encoded symbols for transmitting in the broadcast channel;
    transmitting (404) a first number of the set of encoded symbols over the broadcast channel;
    requesting (408), based on determining the transmission of a sub set of the first number of the set of encoded symbols, feedback from a set of user equipment, UEs, receiving the set of encoded symbols in the broadcast channel, wherein the feedback relates to whether the data is recovered from the first number of the set of encoded symbols;
    receiving (414), from at least a portion of the set of UEs, the feedback; and
    determining (416), based at least in part on the feedback, whether to continue transmitting a second number of the set of encoded symbols or begin transmitting a new set of encoded symbols representing new data to be transmitted in the broadcast channel.

2.  The method of claim 1, wherein determining includes determining to continue transmitting the second number of the set of encoded symbols, and further comprising requesting the feedback from a second set of UEs receiving the first number of the set of encoded symbols and the second number of the set of encoded symbols.

3.  The method of claim 2, wherein requesting the feedback from the second set of UEs is based on determining that a first symbol of the second number of the set of encoded symbols is at least a period number of symbols from a last symbol of the first number of the set of encoded symbols.

4.  The method of claim 2, wherein the first set of UEs is the same as the second set of UEs.

5.  The method of claim 2, wherein the first set of UEs is different from the second set of UEs.

6.  The method of claim 1, further comprising determining the first number of the set of encoded symbols based on a parameter value that represents receiving the set of source symbols with a threshold probability.

7.  The method of claim 1, further comprising determining the first number of the set of encoded symbols based on a parameter value obtained as a function of historical transmitter overhead.

8.  The method of claim 1, wherein determining whether to continue transmitting the second number of the set of encoded symbols or begin transmitting the new set of encoded symbols is based at least in part on determining whether a threshold percentage of the feedback indicates that the corresponding UEs in the set of UEs have recovered the data from the first number of the set of encoded symbols.

9.  The method of claim 8, wherein the threshold percentage of the feedback from the set of UEs relates to an assumption that another threshold percentage all UEs receiving the broadcast channel have recovered the data from the first number of the set of encoded symbols.

10. The method of claim 1, further comprising selecting the set of UEs as a random selection from all UEs receiving the broadcast channel.

11. The method of claim 1, further comprising selecting the set of UEs as a random selection from a subset of all UEs receiving the broadcast channel considered to be cell-edge UEs.

**12.** The method of claim 1, wherein requesting the feedback from the set of UEs is based at least in part on determining that transmission of the data corresponds to a feedback period.

**13.** The method of claim 12, further comprising adjusting the feedback period based at least in part on determining a level of transmitter overhead based on a number of the set of encoded symbols as compared to a number of the set of source symbols.

**14.** An apparatus for wireless communication, comprising:

a transceiver;
a memory configured to store instructions; and
one or more processors communicatively coupled with the memory and the transceiver, wherein the one or more processors are configured to perform one or more of the methods of claim 1-13.

**Patentansprüche**

**1.** Ein Verfahren zur drahtlosen Kommunikation, das Folgendes aufweist:

Erzeugen (402) eines Satzes codierter Symbole zum Senden in einem Sendekanal für einen Satz von Quellensymbolen, die in dem Sendekanal zu sendende Daten repräsentieren;
Senden (404) einer ersten Anzahl des Satzes codierter Symbole über den Sendekanal;
Anfordern (408) eines Feedbacks von einem Satz Benutzergeräte, UEs (UEs = User Equipments), die den Satz codierter Symbole in dem Sendekanal empfangen, auf der Grundlage der Bestimmung des Sendens eines Teilsatzes der ersten Anzahl des Satzes codierter Symbole, wobei sich das Feedback darauf bezieht, ob die Daten aus der ersten Anzahl des Satzes codierter Symbole wiederhergestellt wurden;
Empfangen (414) des Feedbacks von zumindest einem Teil des Satzes von UEs; und
Bestimmen (416), ob mit dem Senden einer zweiten Anzahl des Satzes codierter Symbole fortgefahren oder mit dem Senden eines neuen Satzes codierter Symbole begonnen werden soll, die neue in dem Sendekanal zu sendende Daten repräsentieren, zumindest teilweise auf der Grundlage des Feedbacks.

**2.** Verfahren nach Anspruch 1, wobei das Bestimmen das Bestimmen des Fortfahrens mit dem Senden der zweiten Anzahl des Satzes codierter Symbole einschließt, und das ferner das Anfordern der Feedback von einem zweiten Satz von UEs aufweist, die die erste Anzahl des Satzes codierter Symbole und die zweite Anzahl des Satzes codierter Symbole empfangen.

**3.** Verfahren nach Anspruch 2, wobei das Anfordern des Feedbacks von dem zweiten Satz von UEs auf der Grundlage der Bestimmung erfolgt, dass ein erstes Symbol der zweiten Anzahl des Satzes codierter Symbole zumindest eine Periodenzahl von Symbolen ab einem letzten Symbol der ersten Anzahl des Satzes codierter Symbole ist.

**4.** Verfahren nach Anspruch 2, wobei der erste Satz von UEs der gleiche wie der zweite Satz von UEs ist.

**5.** Verfahren nach Anspruch 2, wobei sich der erste Satz von UEs von dem zweiten Satz von UEs unterscheidet.

**6.** Verfahren nach Anspruch 1, das ferner das Bestimmen der ersten Anzahl des Satzes codierter Symbole auf der Grundlage eines Parameterwerts aufweist, der das Empfangen des Satzes von Quellensymbolen mit einer Schwellenwahrscheinlichkeit repräsentiert.

**7.** Verfahren nach Anspruch 1, das ferner das Bestimmen der ersten Anzahl des Satzes codierter Symbole auf der Grundlage eines Parameterwerts aufweist, der als Funktion des Sender-Overhead in der Vergangenheit ermittelt wird.

**8.** Verfahren nach Anspruch 1, wobei das Bestimmen, ob mit dem Senden der zweiten Anzahl des Satzes codierter Symbole fortgefahren oder mit dem Senden des neuen Satzes codierter Symbole begonnen werden soll, zumindest teilweise auf der Grundlage der Bestimmung erfolgt, ob ein Schwellenprozentsatz des Feedbacks angibt, dass die entsprechenden UEs in dem Satz von UEs die Daten aus der ersten Anzahl des Satzes codierter Symbole wiederhergestellt haben.

9. Verfahren nach Anspruch 8, wobei sich der Schwellenprozentsatz des Feedbacks von dem Satz von UEs auf eine Annahme bezieht, dass ein weiterer Schwellenprozentsatz sämtlicher UEs, die den Sendekanal empfangen, die Daten aus der ersten Anzahl des Satzes codierter Symbole abgerufen haben.

10. Verfahren nach Anspruch 1, das ferner die Auswahl des Satzes von UEs als zufällige Auswahl aus sämtlichen UEs aufweist, die den Sendekanal empfangen.

11. Verfahren nach Anspruch 1, das ferner die Auswahl des Satzes von UEs als zufällige Auswahl aus einem Teilsatz sämtlicher den Sendekanal empfangenden UEs aufweist, die als Cell-Edge-UEs betrachtet werden.

12. Verfahren nach Anspruch 1, wobei das Anfordern des Feedbacks von dem Satz von UEs zumindest teilweise auf der Grundlage der Bestimmung erfolgt, dass das Senden der Daten einer Feedback-Periode entspricht.

13. Verfahren nach Anspruch 12, das ferner das Einstellen der Feedback-Periode zumindest teilweise auf der Grundlage der Bestimmung eines Grads des Sender-Overhead auf der Grundlage einer Anzahl des Satzes codierter Symbole im Vergleich zu einer Anzahl des Satzes von Quellensymbolen aufweist.

14. Eine Vorrichtung zur drahtlosen Kommunikation, die Folgendes aufweist:

einen Sender-Empfänger;
einen Speicher, der auf das Speichern von Anweisungen ausgelegt ist; und
einen oder mehrere Prozessoren, die kommunikativ mit dem Speicher und dem Sender-Empfänger gekoppelt sind, wobei der eine oder die mehreren Prozessoren auf das Ausführen eines oder mehrerer der Verfahren nach den Ansprüchen 1 - 13 ausgelegt sind.

**Revendications**

1. Procédé de communication sans fil, comprenant les étapes consistant à :

générer (402), pour un ensemble de symboles sources représentant des données à émettre dans un canal de diffusion, un ensemble de symboles codés destinés à être émis dans le canal de diffusion ;
émettre (404), sur le canal de diffusion, un premier nombre de symboles codés parmi l'ensemble de symboles codés ;
demander (408), sur la base de la détermination de l'émission d'un sous-ensemble du premier nombre de symboles codés parmi l'ensemble de symboles codés, un retour à un ensemble d'équipements d'utilisateur, UE, recevant l'ensemble de symboles codés dans le canal de diffusion, le retour se rapportant au fait que les données soient récupérées ou non à partir du premier nombre de symboles codés parmi l'ensemble de symboles codés ;
recevoir (414) le retour en provenance d'au moins une partie de l'ensemble d'UE ; et
déterminer (416), sur la base au moins en partie du retour, s'il faut continuer à émettre un second nombre de symboles codés parmi l'ensemble de symboles codés ou commencer à émettre un nouvel ensemble de symboles codés représentant de nouvelles données à émettre dans le canal de diffusion.

2. Procédé selon la revendication 1, la détermination comprenant l'étape consistant à déterminer qu'il faut continuer à émettre le second nombre de symboles codés parmi l'ensemble de symboles codés, et comprenant en outre l'étape consistant à demander le retour à un second ensemble d'UE recevant le premier nombre de symboles codés parmi l'ensemble de symboles codés et le second nombre de symboles codés parmi l'ensemble de symboles codés.

3. Procédé selon la revendication 2, la demande de retour au second ensemble d'UE étant basée sur la détermination du fait qu'un premier symbole du second nombre de symboles codés parmi l'ensemble de symboles codés est à au moins un nombre périodique de symboles d'un dernier symbole du premier nombre de symboles codés parmi l'ensemble de symboles codés.

4. Procédé selon la revendication 2, le premier ensemble d'UE étant identique au second ensemble d'UE.

5. Procédé selon la revendication 2, le premier ensemble d'UE étant différent du second ensemble d'UE.

6. Procédé selon la revendication 1, comprenant en outre l'étape consistant à déterminer le premier nombre de

EP 4 128 591 B1

symboles codés parmi l'ensemble de symboles codés sur la base d'une valeur de paramètre qui représente la réception de l'ensemble de symboles sources avec une probabilité seuil.

7. Procédé selon la revendication 1, comprenant en outre l'étape consistant à déterminer le premier nombre de symboles codés parmi l'ensemble de symboles codés sur la base d'une valeur de paramètre obtenue en fonction d'un surdébit historique d'émetteur.

8. Procédé selon la revendication 1, le fait de déterminer s'il faut continuer à émettre le second nombre de symboles codés parmi l'ensemble de symboles codés ou commencer à émettre le nouvel ensemble de symboles codés étant basé, au moins en partie, sur la détermination du fait qu'un pourcentage seuil du retour indique ou non que les UE correspondants parmi l'ensemble d'UE aient récupéré les données à partir du premier nombre de symboles codés parmi l'ensemble de symboles codés.

9. Procédé selon la revendication 8, le pourcentage seuil du retour en provenance de l'ensemble d'UE se rapportant à une hypothèse selon laquelle un autre pourcentage seuil de tous les UE recevant le canal de diffusion aient récupéré les données à partir du premier nombre de symboles codés parmi l'ensemble de symboles codés.

10. Procédé selon la revendication 1, comprenant en outre l'étape consistant à sélectionner l'ensemble d'UE comme une sélection aléatoire parmi tous les UE recevant le canal de diffusion.

11. Procédé selon la revendication 1, comprenant en outre l'étape consistant à sélectionner l'ensemble d'UE comme une sélection aléatoire parmi un sous-ensemble de tous les UE recevant le canal de diffusion considérés comme des UE en périphérie de cellule.

12. Procédé selon la revendication 1, la demande du retour à l'ensemble d'UE étant basée, au moins en partie, sur la détermination du fait que l'émission des données correspond à une période de retour.

13. Procédé selon la revendication 12, comprenant en outre l'étape consistant à régler la période de retour sur la base, au moins en partie, de la détermination d'un niveau de surdébit d'émetteur sur la base d'un nombre de symboles codés parmi l'ensemble de symboles codés par comparaison avec un nombre de symboles sources parmi l'ensemble de symboles sources.

14. Appareil de communication sans fil, comprenant :

un émetteur-récepteur ;
une mémoire configurée pour stocker des instructions ; et
un ou plusieurs processeurs couplés en communication à la mémoire et à l'émetteur-récepteur, le ou les processeurs étant configurés pour réaliser un ou plusieurs des procédés selon les revendications 1 à 13.

FIG. 1

FIG. 2

FIG. 3

400

Generate, for a set of source symbols, a set of encoded symbols for transmitting in a broadcast channel — 402

Transmit a first number of the set of encoded symbols over the broadcast channel — 404

Determine to transmit the first number of the set of encoded symbols based on a first condition — 406

Request, based on transmitting the first number of the set of encoded symbols, feedback from a set of UEs receiving the encoded symbols in the broadcast channel — 408

Determine that the data is at a period for requesting feedback — 422

Request the feedback based on detecting the first condition — 410

Determine the set of UEs from which to request feedback — 412

Receive, from at least a portion of the set of UEs, the feedback — 414

Determine, based at least in part on the feedback, whether to continue transmitting a second number of the set of encoded symbols or begin transmitting a new set of encoded symbols — 416

Determine whether to continue transmitting based on a second condition — 418

Determine a period for requesting feedback — 420

FIG. 4

EP 4 128 591 B1

500

Block Length

$p_0$ | $p_1$ | ...

No Feedback

Start

Condition 1
502

Every T period, select V UEs. Feedback whether
the data has been recovered

Condition 2
504

FIG. 5

600

Block Length

... | | | | | | | | | | | | | |

Start

Feedback every data transmission

Convergent 602

Feedback every S data transmissions

Divergent 604

Decrease S

Convergent 606

**FIG. 6**

700

Receive, over a broadcast channel from a base station, a first number of a set of encoded symbols
702

Attempt to recover, based on the first number of the set of encoded symbols, a set of source symbols representing data transmitted over the broadcast channel
704

Receive an indication to report feedback for the first number of the set of encoded symbols
706

Transmit, to the base station, the feedback based on whether attempting to recover the set of source symbols is successful
708

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015146607 A1